# EUROPÄISCHE PATENTSCHRIFT

(11) **EP 3 137 567 B1**
(45) Veröffentlichungstag und Bekanntmachung des Hinweises auf die Patenterteilung: **27.12.2017**
(21) Anmeldenummer: 15713471.9
(22) Anmeldetag: 30.03.2015
(51) Int. Cl.: C09J 7/02

(54) **HILFSKLEBEBAND FÜR EINE WIEDERABLÖSBARE KLEBEFOLIE**
ADHESIVE TAPE AID FOR A REDETACHABLE ADHESIVE FILM
RUBAN ADHÉSIF AUXILIAIRE POUR FILM ADHÉSIF REPOSITIONNABLE

(30) Priorität: 30.04.2014 DE 102014208264
(43) Veröffentlichungstag der Anmeldung: 08.03.2017
(73) Patentinhaber: tesa SE, 22848 Norderstedt (DE)
(72) Erfinder: KRAWINKEL, Thorsten, 22457 Hamburg (DE); SMITH, Marji, Sunnyvale, CA 94085 (US)
(86) Internationale Anmeldenummer: PCT/EP2015/056893
(87) Internationale Veröffentlichungsnummer: WO 2015/165674

(56) Entgegenhaltungen:
- DE-A1- 19 729 706

## Beschreibung

Die Erfindung betrifft eine Ablösehilfe zum Ablösen einer dehnbaren beiderseitig klebenden Klebefolie, die durch dehnendes Verstrecken in der Verklebungsebene rückstands- und zerstörungsfrei wiederablösbar ist, die mindestens ein Ende aufweist, das als Anfasser ausgebildet ist, und mittels derer ein Gegenstand befestigt ist, durch Ziehen am Anfasser in einem Ablösewinkel > 45° um eine Kante des befestigten Gegenstandes sowie eine hierfür angepasste Klebefolie.

Elastisch oder plastisch hochdehnbare Selbstklebebänder oder -folien, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Selbstklebebänder bezeichnet.

Eingesetzt werden solche strippfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 C1, DE 195 11 288 C1, US 5,507,464 B1, US 5,672,402 B1 und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Für den Einsatz im Wohn- und Bürobereich werden im Allgemeinen recht dicke Produkte von über 400 µm eingesetzt.

In der Consumer-Elektronik-Industrie - wie zum Beispiel bei der Herstellung von Mobiltelefonen, Digitalkameras oder Laptops - wird der Wunsch nach einer Möglichkeit, die einzelnen Bauteile nach der Nutzung bei der Entsorgung zu trennen, immer größer. Dann können einige Bauteile wiederverwendet oder aufbereitet werden. Oder es ist zumindest eine getrennte Entsorgung ermöglicht. Daher sind wiederlösbare Klebeverbindungen in dieser Industrie von großem Interesse. Insbesondere Klebebänder, die eine hohe Halteleistung besitzen und auf Wunsch leicht entfernt werden können, bilden hier eine sinnvolle Alternative zu Klebestreifen, die zum Ablösen erst vorbehandelt werden müssen, indem sie zum Beispiel erhitzt werden.

Auch im Zuge der Montage ist eine einfach wiederlösbare Klebeverbindung wünschenswert, um Komponenten, die nicht korrekt angebracht oder ausgerichtet sind, entfernen und neu justieren und befestigen zu können, statt das gesamte Bauteil als Ausschuss zu verwerfen. Ein Beispiel sind Batterien in Mobiltelefonen, die gegen Ende des Fertigungsprozesses eingesetzt werden. Ist die Batterie nicht an der richtigen Stelle in der richtigen Ausrichtung positioniert, kann das Gerät nicht verwendet werden. Wenn keine Neuanordnung der Batterie möglich ist, müsste das gesamte Gerät verworfen werden einschließlich der bereits montierten und teilweise teuren Komponenten wie z.B. des Displays. Die Möglichkeit, die Batterie erneut zu positionieren würde somit zu einer Verminderung des Ausschusses und zu erheblichen Einsparungen führen.

Des Weiteren ist eine Wiederlösbarkeit bestimmter Komponenten im Bereich der Consumer-Elektronik wünschenswert, um defekte Bauteile auf einfache Weise austauschen zu können. So werden zum Beispiel die Batterien in Mobilfunktelefonen oder Digitalkameras zunehmend im Gerät verklebt; die Aufladung solcher Batterien erfolgt im Gerät. Wenn nun eine Batterie allerdings wegen Defekts ausgetauscht werden muss, ist es erforderlich, die Klebeverbindung zu lösen.

Im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen.

Die Ablösung der Klebestreifen erfolgt dabei idealerweise durch Dehnung der Klebestreifen in der Verklebungsebene, da die Ablösekraft geringer ist, je kleiner der Winkel zwischen der Verklebungsfläche und der Dehnrichtung. Da die einzelnen Bauteile in den Consumer Electronic Geräten allerdings häufig sehr eng beieinanderliegen, gibt es oftmals keinen ausreichenden Platz zum Dehnen der Klebebänder. Die Dehnung kann dann nur in einem größeren Winkel zur Verklebungsfläche stattfinden, im ungünstigsten Fall ist nur ein Dehnen in einem 90°-Winkel oder sogar einem noch größeren Winkel möglich.

Beim Ablösen um einen größeren Winkel nimmt allerdings die Kraft, die benötigt wird, deutlich zu.

Beim Einsatz von sehr dünnen strippfähigen Klebestreifen, die ohne Träger auskommen, kommt es dann vermehrt zu Reißern. Wenn die Klebestreifen reißen, ist ein Ablösen in der Regel allerdings nicht mehr möglich, weil der Rest des Klebestreifens in die Klebefuge zurückschnellt und somit kein Anfasser zur Verfügung steht.

Bei Klebemassen, die solch eine hohe Reißfestigkeit besitzen, dass sie nicht reißen, kann häufig beobachtet werden, dass die Kräfte beim Verdehnen um einen 90°C-Winkel so hoch werden, dass sich das Tape nicht weiter strecken lässt, ein Ablösen ist dann ebenfalls unmöglich.

Abhilfe kann hier die Ausgestaltung der Kante geben, um die das Ablösen erfolgt. In der DE 197 29 706 A1 wird eine solche Lösung für Haken im Consumer Bereich beschrieben. Die Kante wird hier aus einem Material gewählt, das eine möglichst geringe Haft- und Gleitreibung aufweist, wie z.B. Polyethylen. Allerdings ist es sehr aufwendig die Kante eines Bausteiles, wie z.B. einer Batterie mit solch einer Kante auszurüsten.

Zudem scheint es sehr aufwendig, die einzelnen Bauteile wie z.B. die Batterien so zu verändern, dass sie eine Kante aus einem Material mit geringer Gleitreibung besitzen. Auch ist eine solche Veränderung nicht immer möglich, da die Bauteile und die Materialien, aus denen sie hergestellt sind, zahlreichen weitern Anforderungen genügen müssen.

Aufgabe der Erfindung ist es daher, beim Ablösen einer Klebefolie, die so angebracht ist, dass ihr Ablösen eine Verdehnung in einem Ablösewinkel von bis zu 135°, insbesondere bis 90° erforderlich macht, die Neigung zur Bildung von Reißern zu verringern und auch bei einem solchen Abzugswinkel eine vollständige Wiederlösbarkeit der Klebefolie mit hoher Sicherheit zu gewährleisten.

Die Aufgabe wird erfindungsgemäß dadurch gelöst, dass als eingangs erwähnte Ablösehilfe ein Hilfsklebeband verwendet wird, wobei das Hilfsklebeband um diejenige Kante des zu befestigenden Gegenstandes geklebt wird, um die das Abziehen erfolgt. Dabei ist das Hilfsklebeband ein einseitiges Klebeband mit einem Träger, wobei der Träger mindestens eine der beiden Eigenschaften
a) der Träger besteht aus einem niederenergetischen Polymer,
b) der Träger weist eine strukturierte Oberfläche auf
erfüllt.

Überraschenderweise wurde gefunden, dass durch das Anbringen eines Klebebandes mit niederenergetischer Polymerrückseite bzw. mit strukturierter Rückseite um die Kante beim Ablösen um diese Kante in einem großen Winkel die Anzahl der Reißer geringer ist, als ohne das entsprechende Klebeband. Weiterhin überraschend ist, dass das Hilfsklebeband während des Ablöseprozesses des durch dehnendes Verstrecken ablösbaren Klebebandes nicht ebenfalls abgelöst wird, auch wenn die Klebkraft des Hilfsklebebandes relativ niedrig ist.

Niederenergetisch im Sinne der Erfindung bedeutet dabei eine Oberflächenspannung < 40 mN/m. Dabei wird die Oberflächenspannung mittels Ethanol-Testtinte ermittelt. Die Testtinte ist in Oberflächenspannungen verschiedener Größe in 2er-Schritten verfügbar. Es wird zunächst eine Tinte mit hoher Oberflächenspannung zügig auf die Oberfläche aufgetragen. Sind die Pinselstrichränder zwei Sekunden lang stabil, ist die Oberfläche gut benetzbar. Die Oberflächenspannung des Substrates entspricht dann mindestens dem Wert der Testtinte. Ziehen sich die Pinselstriche der Testtinte zusammen, so fährt man mit der nächst niedrigen Testtinte fort. Auf diese Weise nähert man sich schrittweise dem Wert der Oberflächenspannung des Materials an. Die Oberflächenspannung des Materials entspricht dem Wert der zuletzt für wenigstens 2 Sekunden benetzenden Testtinte.

Unter Ablösewinkel im Sinne der Erfindung ist dabei der Winkel zu verstehen, den der Anfasser beim Abziehen zur Verklebungsebene bildet. Der Ablösewinkel beträgt im Falle der vorliegenden Erfindung vorzugsweise zwischen 45° und 90°, insbesondere zwischen 60° und 90°, und besonders bevorzugt beträgt er 90°, d.h. ein Ablösen erfolgt senkrecht zur Verklebungsebene.

Der Begriff "Klebefolie" im Sinne der Erfindung umfasst dabei ausdrücklich auch Klebebänder, die sich von Klebefolien lediglich hinsichtlich ihrer Ausdehnung, d.h. ihrem Verhältnis von Länge zu Breite unterscheiden.

Die vorliegende Erfindung ist für alle zweiseitigen dehnbaren beiderseitig klebenden Klebefolien, die durch dehnendes Verstrecken in der Verklebungsebene rückstands- und zerstörungsfrei wiederablösbar sind, geeignet. Insbesondere ist die Klebefolie beiderseitig haftklebend ausgebildet.

Als Klebefolien können sowohl solche eingesetzt werden, die einen dehnbaren Träger besitzen, der für die Reißfestigkeit verantwortlich ist, als auch solche, die nur aus Klebmasse bestehen.

Der Anfasser der Klebefolie ist ein Endbereich der Klebefolie, der nicht klebend ist. Ein solcher Bereich kann geschaffen werden, indem bei einer Klebefolie, die durch Auftrag von Klebern auf beiden Seiten eines dehnbaren Trägers gebildet ist, in einem Bereich kein Kleber aufgetragen ist, oder indem bei einer Klebefolie, sei es mit oder ohne Träger, die beide Klebeflächen von einer Abdeckung bedeckt sind, wobei die außen liegenden Seiten der Abdeckung selbst nicht klebend sind. Eine Klebefolie kann mehrere Anfasser aufweisen. Vorzugsweise weist sie jedoch genau einen Anfasser auf. Der Anfasser ist dabei in Streckrichtung der Klebefolie angeordnet.

Als Träger auf Basis eines niederenergetische Polymers für das zu nutzende Hilfsklebeband, das um die Ecke geklebt wird, kommen z.B. Polyethylenfolien wie HDPE, LDPE oder auch Copolymere mit Polypropylen in Betracht. Einsetzbar sind aber auch Folien auf der Basis von fluorierten Polymeren wie Polytetrafluorethylen oder Polyvinylidenfluorid.

Strukturierte Träger können auch andere Kunststoffe beinhalten wie z.B. Polyethylenterephthalat (PET) oder Polypropylen (PP) um nur einige wenige Beispiele zu nennen. Die Strukturierung kann dabei sowohl durch eine Prägung als auch durch ein Ätzen der Oberfläche erfolgen. Die Strukturierung kann beispielsweise die Form von Rillen oder Karos aufweisen. Die Strukturierung kann aber auch eine zufällige sein, wie dies insbesondere beim Ätzen der Fall ist. Der Mittenrauwert der Strukturierung Ra muss dabei einen Wert von größer 0,5µm aufweisen, wenn der Wert nach der DIN EN ISO 4287:2010 aufgenommen wird. Vorzugsweise ist der Mittenrauwert größer 0,8µm und besonders bevorzug größer 1µm.

Das erfindungsgemäße einseitige Hilfsklebeband mit einem Träger auf Basis eines niederenergetischen oder strukturierten Kunststoffs wird um die Kante des Gegenstandes geklebt, um die die Klebefolie abgezogen werden soll. Dabei wird das Hilfsklebeband aufgeklebt, bevor die Klebefolie appliziert wird.

Die Aufgabe der vorliegenden Erfindung wird darüber hinaus durch eine mehrlagige Klebefolie gelöst, die die folgenden Schichten umfasst:
a) eine dehnbare beiderseitig klebende Klebefolie, die durch dehnendes Verstrecken in der Verklebungsebene rückstands- und zerstörungsfrei wiederablösbar ist, die mindestens ein Ende aufweist, das als Anfasser ausgebildet ist,
b) ein einseitiges Hilfsklebeband, dessen Träger eine der beiden Eigenschaften
   i) der Träger besteht aus einem niederenergetischen Polymer
   ii) der Träger weist eine strukturierte Oberfläche auf
   erfüllt,
wobei das Hilfsklebeband ausgehend von dem an den Anfasser angrenzenden Bereich zumindest teilweise die wiederablösbare Klebefolie sowie zumindest teilweise den Anfasser bedeckt, wobei die nicht klebende Trägerseite des Hilfsklebebandes der wiederablösbaren Klebefolie und dem Anfasser zugewandt ist.

Im Bereich des Anfassers ist das Hilfsklebeband dabei nicht mit dem Anfasser klebend verbunden, da hier zwei nicht klebende Oberflächen aufeinandertreffen, denn der Anfasser ist definitionsgemäß nicht klebend ausgebildet und das Hilfsklebeband wird mit seiner klebenden Seite am zu befestigenden Gegenstand befestigt. Daher liegen Hilfsklebeband und Anfasser im Bereich des Anfassers nur aufeinander.

Wird eine solche mehrlagige Klebefolie verwendet, ist nur ein einziger Klebeschritt notwendig, da das Hilfsklebeband und die wiederablösbare Klebefolie miteinander verbunden ist, so dass sie gemeinsam auf den zu befestigenden Gegenstand geklebt werden.

Als dehnbare beiderseitig klebende Klebefolie können dabei die bekannten oben als strippfähige Klebebänder bezeichneten Klebefolien verwendet werden, die zum Beispiel in den oben in der Einleitung angegebenen Schriften beschrieben sind.

Vorzugsweise erstreckt sich das Hilfsklebeband über die gesamte Breite der beiderseitig klebenden Klebefolie, da so ein gleichmäßiger Abziehvorgang gewährleistet ist.

Das Hilfsklebeband kann sich über die gesamte Länge des klebenden Bereiches der Klebefolie erstrecken. Vorzugsweise erstreckt sich das Hilfsklebeband jedoch vom Anfasser ausgehend in Längsrichtung nur über einen Teil der wiederablösbaren Klebefolie. Ebenso ist es besonders vorteilhaft, wenn sich das Hilfsklebeband des Weiteren vom klebenden Bereich ausgehend über einen Teil des Anfassers erstreckt.

Als Längsrichtung wird dabei die Richtung bezeichnet, in der die Verstreckung erfolgt.

Es sind viele Einsatzgebiete für die vorliegende Erfindung denkbar und möglich. Besonders geeignet ist die vorliegende Erfindung für die Consumer-Elektronik Industrie. Unter Consumer-Elektronik ist dabei die Elektronik in den Bereichen Unterhaltung, Kommunikation und Büro zu verstehen. Die vorliegende Erfindung ist zum Einsatz bei der Herstellung, insbesondere der industriellen Fertigung von Geräten für diesen Bereich besonders geeignet.

Nachfolgend sind einige Geräte aufgeführt, in deren Herstellungsprozess die Erfindung vorteilhafter Weise zum Einsatz kommen kann, ohne sich durch die konkret genannten Vertreter in dieser Liste bezüglich dem Gegenstand der Erfindung unnötig beschränken zu wollen.
- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

### Beschreibung der Abbildungen

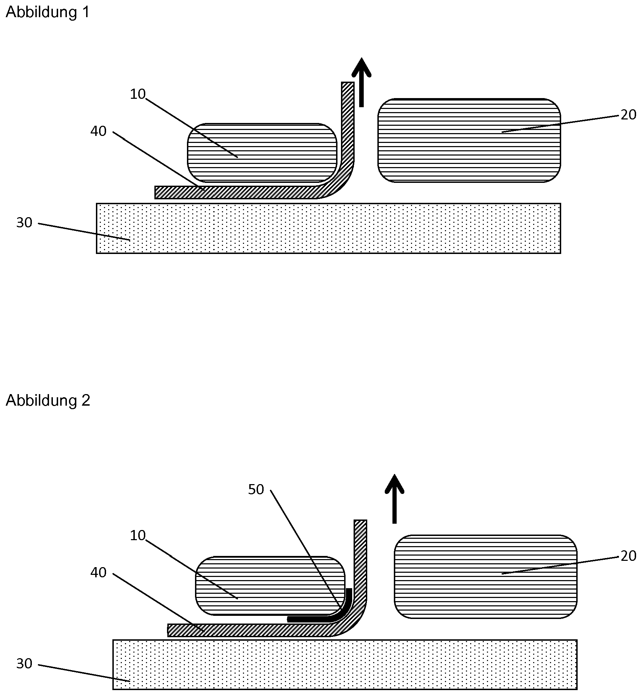

Abbildung 1 zeigt den Querschnitt zweier mit Bauteile, die auf einer Basis befestigt sind. Dabei ist das wieder abzulösende Bauteil 10 mit Hilfe eines durch Zug ablösbaren Klebestreifens 40 mit einer Basis 30 verbunden. Durch das benachbarte Bauteil 20 ist ein Dehnen des Klebestreifens in der Verklebungsebene nicht möglich, weshalb ein Ablösen nur in einem großen Ablösewinkel um die Kante des Bauteils 40 möglich ist. Das Ablösen erfolgt auf der Abbildung nach oben in Pfeilrichtung.

Abbildung 2 zeigt den Aufbau wie in Abbildung 1 mit den Bauteilen 10 und 20 und dem durch Dehnen lösbaren Klebeband 40. Allerdings ist diesmal um die Kante des zu lösenden Bauteils ein einseitiges Klebeband mit einem Träger auf Basis eines niederenergetischen Polymers bzw. eines strukturierten Polymers geklebt. Das Ablösen erfolgt nun um die neu geschaffene Kante und nicht mehr um die originale Kante des Bauteils 10, wodurch der Einfluss der Kante des Bauteils reduziert wird.

### Beispiele

Ein Probekörper aus Polystyrol mit einer Kante mit einem Radius von 3mm wird auf einer Aluminiumplatte mit tesa 70420, einem einschichtigen Klebeband in 200µm Dicke verklebt. Das Klebeband hat eine Breite von 15mm und eine Verklebungslänge von 40mm. Der Anfasserbereich des Klebebandes, der aus der Klebfuge herausragt, ist 30mm lang.

Das Ablösen des Klebestreifens erfolgt in einem 90° Winkel bezogen auf die Verklebungsfläche mit einer Geschwindigkeit von 1000mm/min.

Es werden nun zwei unterschiedliche Tapes verwendet, die um die Kante des Polystyrols geklebt werden, um die abgelöst werden soll. Zum einen wird ein Klebeband mit einer Acrylatmasse und einem Träger auf HDPE genutzt, zum anderen ein Klebeband mit einer Acrylatmasse und einem geätzten PET-Träger mit einer Mittenrauigkeit von 1µm.

Es werden mit jeder Variante 10 Versuche durchgeführt, registriert wird dabei die Anzahl der Klebestreifen, die beim Ablösen abgerissen sind.

| Beispiel Nr. | Ausbildung der Kante | Anzahl der Reißer bei 10 Versuchen |
|---|---|---|
| 1 | Ohne Variation | 3 |
| 2 | Mit PE-Klebeband | 1 |
| 3 | Mit geätztem PET-Träger | 1 |

Wie aus der Tabelle hervorgeht, nimmt die Neigung zur Bildung von Reißern bei der erfindungsgemäßen Verwendung sehr stark ab.

## Patentansprüche

1. Verwendung eines Hilfsklebebandes als Ablösehilfe zum Ablösen einer dehnbaren beiderseitig klebenden Klebefolie, die durch dehnendes Verstrecken in der Verklebungsebene rückstands- und zerstörungsfrei wiederablösbar ist, die mindestens ein Ende aufweist, das als Anfasser ausgebildet ist, und mittels derer ein Gegenstand befestigt ist, durch Ziehen am Anfasser in einem Ablösewinkel > 45° um eine Kante des befestigten Gegenstandes, wobei das Hilfsklebeband um diese Kante geklebt wird und das Hilfsklebeband ein einseitiges Klebeband mit einem Träger ist, wobei der Träger mindestens eine der beiden Eigenschaften
a) der Träger besteht aus einem niederenergetischen Polymer,
b) der Träger weist eine strukturierte Oberfläche auf
erfüllt.

2. Verwendung eines Hilfsklebebandes nach Anspruch 1, **dadurch gekennzeichnet, dass** der Träger aus Polyethylen oder Polytetrafluorethylen besteht.

3. Verwendung eines Hilfsklebebandes nach Anspruch 1 oder 2, **dadurch gekennzeichnet, dass** der Träger aus einem Polymer besteht, dessen Oberfläche eine Struktur mit einem Mittenrauwert Ra von größer 0,5µm aufweist.

4. Mehrlagige Klebefolie, umfassend folgende Schichten:
a) eine dehnbare beiderseitig klebende Klebefolie, die durch dehnendes Verstrecken in der Verklebungsebene rückstands- und zerstörungsfrei wiederablösbar ist, die mindestens ein Ende aufweist, das als Anfasser ausgebildet ist,
b) ein einseitiges Hilfsklebeband, dessen Träger eine der beiden Eigenschaften
i) der Träger besteht aus einem niederenergetischen Polymer
ii) der Träger weist eine strukturierte Oberfläche auf
erfüllt,
wobei das Hilfsklebeband ausgehend von dem an den Anfasser angrenzenden Bereich zumindest teilweise die wiederablösbare Klebefolie sowie zumindest teilweise den Anfasser bedeckt, wobei die nicht klebende Trägerseite des Hilfsklebebandes der wiederablösbaren Klebefolie und dem Anfasser zugewandt ist.

5. Mehrlagige Klebefolie nach Anspruch 4, **dadurch gekennzeichnet, dass** sich das Hilfsklebeband über die gesamte Breite der beiderseitig klebenden Klebefolie erstreckt.

6. Mehrlagige Klebefolie nach Anspruch 4 oder 5, **dadurch gekennzeichnet, dass** sich das Hilfsklebeband vom Anfasser ausgehend in Längsrichtung nur über einen Teil der wiederablösbaren Klebefolie sowie vom klebenden Bereich ausgehend nur über einen Teil des Anfassers erstreckt.

7. Verwendung einer Klebefolie nach einem der Ansprüche 4 bis 6 zur wiederlösbaren Befestigung eines Gegenstandes, wobei das Wiederlösen durch Ziehen am Anfasser in einem Ablösewinkel > 45° um eine Kante des befestigten Gegenstandes herum erfolgt, um die das Hilfsklebeband der Klebefolie geklebt ist.

8. Verwendung nach einem der Ansprüche 1 bis 3 oder 7 in der Consumer-Elektronik Industrie.

## Claims

1. Use of an auxiliary adhesive tape as detachment aid for detaching an extensible, double-sidedly adhesive film which is redetachable without residue or destruction by extensive stretching in the bond plane, having at least one end designed as a grip tab, and used to affix an article, by pulling on the grip tab at a detachment angle > 45° around one edge of the affixed article, the auxiliary adhesive tape being bonded around this edge, and the auxiliary adhesive tape being a single-sided adhesive tape with a carrier, the carrier fulfilling at least one of the two following properties:
a) the carrier consists of a low-energy polymer,
b) the carrier has a structured surface.

2. Use of an auxiliary adhesive tape according to Claim 1, **characterized in that** the carrier consists of polyethylene or polytetrafluoroethylene.

3. Use of an auxiliary adhesive tape according to Claim 1 or 2, **characterized in that** the carrier consists of a polymer whose surface has a structure with a mean roughness Ra of greater than 0.5 µm.

4. Multi-ply adhesive film comprising the following layers:
a) an extensible, double-sidedly adhesive film which is redetachable without residue or destruction by extensive stretching in the bond plane, having at least one end designed as a grip tab,
b) a single-sided auxiliary adhesive tape whose carrier fulfils one of the two following properties:
i) the carrier consists of a low-energy polymer
ii) the carrier has a structured surface,
where the auxiliary adhesive tape, starting from the region bordering the grip tab, at least partly covers the redetachable adhesive film and also at least partly covers the grip tab, with the non-adhesive carrier side of the auxiliary adhesive tape facing the redetachable adhesive film and the grip tab.

5. Multi-ply adhesive film according to Claim 4, **characterized in that** the auxiliary adhesive tape extends over the entire width of the double-sidedly adhesive film.

6. Multi-ply adhesive film according to Claim 4 or 5, **characterized in that** the auxiliary adhesive tape, starting from the grip tab, extends in the longitudinal direction only over part of the redetachable adhesive film, and also, starting from the adhesive region, extends only over part of the grip tab.

7. Use of an adhesive film according to any of Claims 4 to 6 for redetachably affixing an article, with redetachment taking place by pulling on the grip tab at a detachment angle > 45° around one edge of the affixed article, the auxiliary adhesive tape of the adhesive film being bonded around said edge.

8. Use according to any of Claims 1 to 3 or 7 in the consumer electronics industry.

## Revendications

1. Utilisation d'un ruban adhésif auxiliaire comme aide au décollement pour décoller un film adhésif double face extensible qui est repositionnable sans laisser de résidus et sans destruction par étirage et allongement dans le plan de collage, qui possède au moins une extrémité se présentant sous la forme d'une languette de préhension et qui permet de fixer un objet, par traction sur la languette selon un angle de décollement > 45° autour d'un bord de l'objet fixé, le ruban adhésif auxiliaire étant collé autour de ce bord et le ruban adhésif auxiliaire se présentant sous la forme d'un ruban adhésif simple face doté d'un support, le support possédant au moins l'une des deux propriétés suivantes :
a) le support est constitué d'un polymère à faible énergie,
b) le support possède une surface structurée.

2. Utilisation d'un ruban adhésif auxiliaire selon la revendication 1, **caractérisée en ce que** le support est constitué de polyéthylène ou de polytétrafluoroéthylène.

3. Utilisation d'un ruban adhésif auxiliaire selon la revendication 1 ou 2, **caractérisée en ce que** le support est constitué d'un polymère dont la surface présente une structure ayant une valeur de rugosité moyenne Ra supérieure à 0,5 µm.

4. Film adhésif multicouche, comprenant les couches suivantes :
a) un film adhésif double face extensible qui est repositionnable sans laisser de résidus et sans destruction par étirage et allongement dans le plan de collage, qui possède au moins une extrémité se présentant sous la forme d'une languette de préhension,
b) un ruban adhésif auxiliaire simple face, dont le support possèdent au moins l'une des deux propriétés suivantes :
i) le support est constitué d'un polymère à faible énergie,
ii) le support possède une surface structurée,
le ruban adhésif auxiliaire recouvrant au moins partiellement le film adhésif repositionnable et au moins partiellement la languette de préhension à partir d'une zone adjacente à la languette de préhension, le côté support non adhésif du ruban adhésif auxiliaire faisant face au film adhésif repositionnable et à la languette de préhension.

5. Film adhésif multicouche selon la revendication 4, **caractérisé en ce que** le ruban adhésif auxiliaire s'étend sur la largeur totale du film adhésif double face.

6. Film adhésif multicouche selon la revendication 4 ou 5, **caractérisé en ce que** le ruban adhésif auxiliaire s'étend dans la direction longitudinale à partir de la languette de préhension uniquement sur une partie du film adhésif repositionnable et à partir de la zone adhésive uniquement sur une partie de la languette de préhension.

7. Utilisation d'un film adhésif selon l'une quelconque des revendications 4 à 6 pour la fixation repositionnable d'un objet, le décollement ayant lieu par traction sur la languette selon un angle de décollement > 45° autour d'un bord de l'objet fixé, autour duquel le ruban adhésif auxiliaire du film adhésif est collé.

8. Utilisation selon l'une quelconque des revendications 1 à 3 ou 7 dans l'industrie de l'électronique grand public.
